# EUROPEAN PATENT APPLICATION

(11) **EP 1 688 769 A1**
(43) Date of publication of application: **09.08.2006**
(21) Application number: 06002108.6
(22) Date of filing: 02.02.2006
(51) Int. Cl.: G02B 6/38, G02B 6/42

(54) **Optical fiber connector component and optical fiber connector using the same**

(30) Priority: 08.02.2005 JP 2005031612
(71) Applicant: HOSIDEN CORPORATION, Yao-shi, Osaka 581-0071 (JP)
(72) Inventor: Mine, Keiji, Yao-shi Osaka 581-0071 (JP); Nakagawa, Hiroshi, Yao-shi Osaka 581-0071 (JP)
(74) Representative: Hoffmann, Eckart

(57) **Abstract**

An optical fiber connector component having a cylindrical light guide member (32) made of a transparent and elastic material, and a pipe (31) for housing the light guide member in the interior, wherein end surfaces (301) and (302) for connecting the light guide member with optical fibers are either convex or concave surfaces, and the distal end of the pipe protrudes past the connecting surfaces in the axial direction of the pipe. The radii of curvature of the connecting end surfaces of the light guide member differ from the radii of curvature of the distal end surfaces of the optical fibers. Therefore, when the distal ends of the optical fibers are inserted through the pipe and pressed against the connecting end surfaces of the light guide member, the connecting end surfaces deform, causing the contact areas to expand outward from the center, and air between the contact surfaces to be expelled.

## Description

### FIELD OF THE INVENTION

This invention relates to an optical fiber connector component and an optical fiber connector that uses this component, and more particularly relates to an optical fiber connector component that has a light guide member made of a transparent elastic material whose refractive index is near that of optical fibers, and that is used to connect optical fibers together or to connect optical fibers and other optical components; and to an optical fiber connector that uses this component.

### BACKGROUND OF THE INVENTION

The transmission efficiency of an optical transmission path that uses optical fibers is markedly affected by connection loss between cores (for convenience, the term "core" also includes the cladding) in the connections between optical fibers in an optical transmission path, and also by connection loss in the connections between optical fibers and other optical components. Connection loss in these connections is primarily the result of misaligned optical axes; inaccurate axial incline or other such positioning errors in the optical fibers; problems with the end surface configuration of the cores of the optical fibers themselves, such as the incline of the core end surfaces of the optical fibers, as well as surface roughness or end surface waviness; and gaps forming between the end surfaces of the optical fiber cores.

Much research and development involving optical fiber connector components for connecting optical fibers to each other or optical fibers and other optical components has hitherto been undertaken to eliminate such causes of connection loss in these connections. These optical fiber connector components have been provided with the structures and characteristics described below.

In Japanese Patent Application Laid-Open No. H05-34532 (Patent Document 1), the optical fiber connector component uses a light guide member made of a transparent elastic material having a refractive index near that of the core of an optical fiber. Transparent silicone rubber is used as the raw material of this light guide member. Formation of an air space that causes connection loss between contact surfaces is prevented by bringing the end surfaces of the optical fibers into abutment under pressure with light guide members formed from elastic material in this manner.

In Japanese Patent Application Laid-Open No. 2001-324641 (Patent Document 2), a flexible light guide member is used as the optical fiber connector component, and the end surfaces of the optical fiber are brought in contact with the optical fiber connector component to ensure that an air space does not form between the contact surfaces.

In Japanese Patent Application Laid-Open No. 2000-162463 (Patent Document 3), positions are aligned easily and accurately by forming the end surface of one optical fiber to be connected into a convex shape without an interposed connector component, and forming the end surface of another optical fiber into a concave shape, and bringing the two into contact directly.

As described above, Patent Documents 1 and 2 disclose, in particular, optical fiber connecting structures designed so that there are no air spaces that cause connection loss between the connecting end surfaces when a connection is established between optical fibers or between optical fibers and other optical components.

First, the optical fiber connecting structure disclosed in Patent Document 1 will be described with reference to FIG. 1. The structural elements of this optical fiber connecting structure include a connecting member 3 made, for example, of a transparent elastic material such as silicone rubber having a refractive index similar to that of an optical fiber, and the connecting member connects optical fibers together or connects an optical fiber and another optical component. The reference numerals 1 a and 2a indicate the cores of optical fibers, and the reference numerals 1b and 2b indicate the claddings that cover these cores. The connecting member 3 is brought into abutment under pressure with and held between the distal end surfaces of the cores 1a and 2a of the optical fibers to optically connect the optical fibers together. The distal ends of the cores 1 a and 2a of the optical fibers and the connecting member 3 are mechanically coupled together by convex connectors 4A and 4B and by a concave connector 5, constituting an optical joint.

To describe the optical fiber connector component disclosed in Patent Document 2 with reference to FIGs. 2A and 2B, an optical fiber connector component 7 is configured from a flexible light transparent member 8 that is larger than the core of the optical fiber 1, and a supporting member 9 that is the same size as the ferrule 6 or the sleeve of the optical fiber 1.

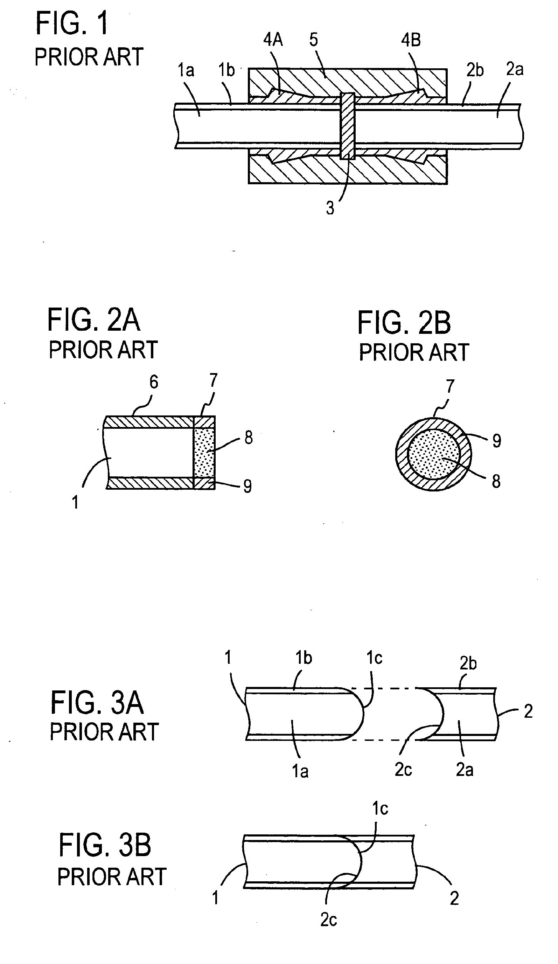

To describe the optical fiber connecting structure disclosed in Patent Document 3 with reference to FIGs. 3A and 3B, the distal-end convex surface 1c of a first plastic optical fiber 1 and the distal-end concave surface 2c of a second plastic optical fiber 2 are brought into close contact with each other. The distal end 1c of the core 1a of the first optical fiber 1 and the distal end 2c of the core 2a of the second optical fiber 2 in FIG. 3A are optically connected by being joined together as shown in FIG. 3B.

The connecting structures of the optical fibers disclosed in Patent Documents 1 and 2 have either a transparent and elastic connecting member 3 or a flexible light transparent member 8. One optical fiber and another optical fiber or an optical module are mechanically and optically connected by being placed facing each other along the distal end surfaces and brought into abutment under pressure with the transparent and elastic connecting member or the flexible light transparent member. In this case, both the end surface of either the transparent and elastic connecting member or the flexible light transparent member and the end surface of the optical fiber are merely formed into flat surfaces, and therefore a simple mechanical connection is created between the two end surfaces, so there is no guarantee that a precise surface polishing of the two end surfaces will sufficiently ensure a uniform mechanical connection between the end surfaces. Conversely, a precise surface finish of the end surfaces of the optical fibers may close off the air between the end surfaces of the connecting member and the end surfaces of the optical fibers due to the contact between the peripheral edge of the end surfaces of the optical fibers and the transparent and elastic connecting member.

### SUMMARY OF THE INVENTION

An object of this invention is to provide an optical fiber connector component wherein an air space is not likely to form between the connecting end surfaces of optical fibers or optical components, and an optical fiber connector that uses this component.

An optical fiber connector component according to this invention comprises:
a cylindrical light guide member made from a transparent and elastic material having substantially the same outside diameter as that of an optical fiber to be connected; and
a pipe held inside the light guide member, having an inside diameter substantially equal to the outside diameter of the light guide member; wherein
the light guide member has at one end a connecting end surface whose radius of curvature is different from the radius of curvature of the distal end surface of the optical fiber, and one end of the pipe protrudes past the connecting end surface of the light guide member.

An optical fiber connector that uses the optical fiber connector component according to this invention comprises:
a tubular connector body having a first and second receiving hole at either end for inserting first and second optical fiber plugs provided to the ends of first and second optical fibers to be connected, wherein the connector body has a partition, integrally formed in the interior, for separating the first and second receiving holes, and a center hole, formed through the partition, for providing communication between the first and second receiving holes; and
the optical fiber connector component being mounted inside the center hole.

An optical fiber connector that uses the optical fiber connector component according to this invention comprises:
a tubular connector body having a receiving hole at one end for inserting an optical fiber plug provided to the end portion of an optical fiber to be connected, and an housing hole at the other end for inserting an optically active element to be connected, wherein the connector body has a partition, integrally formed in the interior, for separating the receiving hole and the housing hole, and a center hole, formed through the partition, for providing communication between the receiving hole and the housing hole; and
the optical fiber connector component being mounted inside the center hole.

### BRIEF DESCRIPTION OF THE DRAWINGS

Fig. 1 is a diagram showing the optical fiber connector component disclosed in Patent Document 1;
FIG. 2A is a diagram showing the structure for connecting optical fibers disclosed in Patent Document 2;
FIG. 2B is a diagram showing the optical fiber connector component in FIG. 2A;
FIG. 3A is a diagram for describing the structure for connecting optical fibers disclosed in Patent Document 3;
FIG. 3B is a diagram showing the optical fibers in FIG. 3A in a connected state;
FIG. 4A is a diagram for describing the first embodiment of an optical fiber connector component according to this invention;
FIG. 4B is a diagram showing the distal end surfaces of the optical fibers in FIG. 4A in a state of contact with the light guide member of the optical fiber connector component;
FIG. 4C is a diagram showing the optical fibers in FIG. 4B but pushed farther in;
FIG. 4D is a diagram for describing the deformation of the light guide member 32 when the pipe 31 is not used;
FIG. 5 is a diagram for describing the second embodiment of the optical fiber connector component according to this invention;
FIG. 6 is a diagram for describing the third embodiment of the optical fiber connector component according to this invention;
FIG. 7 is a diagram for describing the fourth embodiment of the optical fiber connector component according to this invention;
FIG. 8A is a diagram for describing the fifth embodiment of the optical fiber connector component according to this invention;
FIG. 8B is a diagram for describing the optical fibers in FIG. 8A in a state of being connected to the optical fiber connector component;
FIG. 9 is a diagram for describing the sixth embodiment of the optical fiber connector component according to this invention;
FIG. 10A is a diagram for describing the optical fiber connector that uses the optical fiber connector component of this invention;
FIG. 10B is a diagram for describing the optical fiber plugs in FIG. 10A in a state of being connected to the optical fiber connector;
FIG. 11 A is a diagram showing another example of an optical fiber connector that uses the optical fiber connector component of this invention; and
FIG. 11B is a diagram for describing an optical fiber and an optically active element in a state of connection with the optical fiber connector in FIG. 11 A.

### DESCRIPTION OF THE PREFERRED EMBODIMENTS

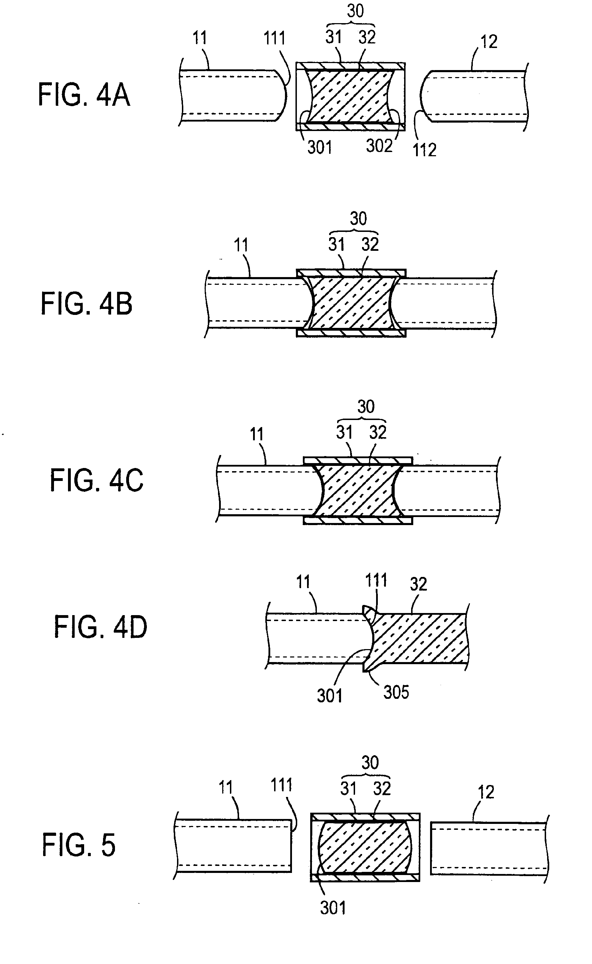

FIG. 4A shows the first embodiment of an optical fiber connector component 30 according to this invention, and optical fibers 11 and 12 to be connected thereto. In the example in FIG. 4A, the optical fibers 11 and 12 to be connected have claddings on the outside of the dotted lines, and cores on the inside of the dotted lines. In this embodiment, the distal end surfaces 111 and 112 of the optical fibers 11 and 12 to be connected are worked into convex spherical surfaces whose centers lie on the axis of the optical fiber 11. The optical fiber connector component 30 according to this embodiment is configured from a cylindrical light guide member 32, and a cylindrical pipe 31 in which the light guide member 32 is inserted.

The light guide member 32 has substantially the same refractive index as the core of the optical fiber 11, and is made of a transparent and elastic material such as silicone rubber, for example. In this embodiment, the end surface 301 for connecting the light guide member 32 and the optical fiber 11 is formed into a concave spherical surface whose center lies on the center axis of the cylindrical light guide member 32. The radius of curvature of this concave spherical surface is greater than the radius of curvature of the distal end surface 111 of the optical fiber 11. The inside diameter of the pipe 31 is very slightly greater than the outside diameter of the optical fiber 11, and the distal end of the pipe 31 on the side connecting with the optical fiber 11 protrudes farther outward in the axial direction of the light guide member 32 than the connecting end surface 301.

In this embodiment, when the distal end of the optical fiber 11 is inserted into the pipe 31, the center of the distal end surface 111 of the optical fiber 11 initially comes in contact only with the center of the connecting end surface 301 of the light guide member 32, as shown in FIG. 4B, because the radius of curvature of the distal end surface 111 of the optical fiber 11 is less than the radius of curvature of the connecting end surface 301 of the light guide member 32. Pressing the optical fiber 11 further into the pipe 31 in the axial direction from this state will cause the light guide member 32 made of a transparent and elastic material to deform, the area of contact with the distal end surface of the optical fiber to gradually expand outward from the center, and the distal end surface 111 of the optical fiber 11 and the connecting end surface 301 of the light guide member 32 to come in full contact over their entire surfaces, as shown in FIG. 4C. Inserting the optical fiber 11 into the pipe 31 and pressing the optical fiber against the light guide member 32 in this manner will cause the area of contact between the distal end surface 111 of the optical fiber and the connecting end surface 301 of the light guide member to expand outward from the center, at which time air between the distal end surface 111 and the connecting end surface 301 is forced out and to the sides. There is therefore only a small possibility that an air space will remain between the contact surfaces.

In the embodiment in FIG. 4A, the optical fiber connector component is formed to be bilaterally symmetrical in the diagram, and the connecting end surface 302 of the light guide member 32 on the opposite side of the connecting end surface 301 is similarly joined to the distal end surface 112 of the optical fiber 12.

The pipe 31 can be formed using a metallic material or a synthetic resin as the raw material. When the pipe 31 is formed using a transparent synthetic resin as the raw material, the same effects as a cladding can be obtained by reducing the refractive index to be less than that of the light guide member 32. If the pipe 31 in FIG. 4C is not provided, the peripheral edge at the end of the light guide member 32 is stretchably deformed outward in the radial direction by the optical fiber 11, as shown in FIG. 4D. As a result, light loss increases in the connecting part, but providing a pipe 31 as in this invention makes it possible to prevent the light guide member 32 from deforming outward in the radial direction.

FIG. 5 shows the second embodiment of an optical fiber connector component according to this invention. FIGS. 4A, 4B, and 4C show a case in which the connecting end surface 301 of the light guide member 32 is a concave spherical surface. This embodiment, however, illustrates a case in which the connecting end surface 301 of the light guide member 32 is formed into a convex surface, and the distal end surface 111 of the optical fiber 11 to be connected is a flat surface perpendicular to the axis of the optical fiber 11. Instead of a flat surface, the distal end surface 111 of the optical fiber 11 may also be a concave surface with a greater radius of curvature than that of the connecting end surface 301, or, conversely, a convex surface similar to FIG. 4A. Since the radius of curvature of a flat surface is infinity, it may be said that the radius of curvature of the connecting end surface 301 in this embodiment is less than the radius of curvature of the distal end surface 111 of the optical fiber. The distal end of the pipe 31 on the side of the optical fiber 11 protrudes farther outward in the axial direction than the center of the connecting end surface 301 of the light guide member 32. Otherwise, this embodiment is similar to the embodiment in FIGS. 4A, 4B, and 4C.

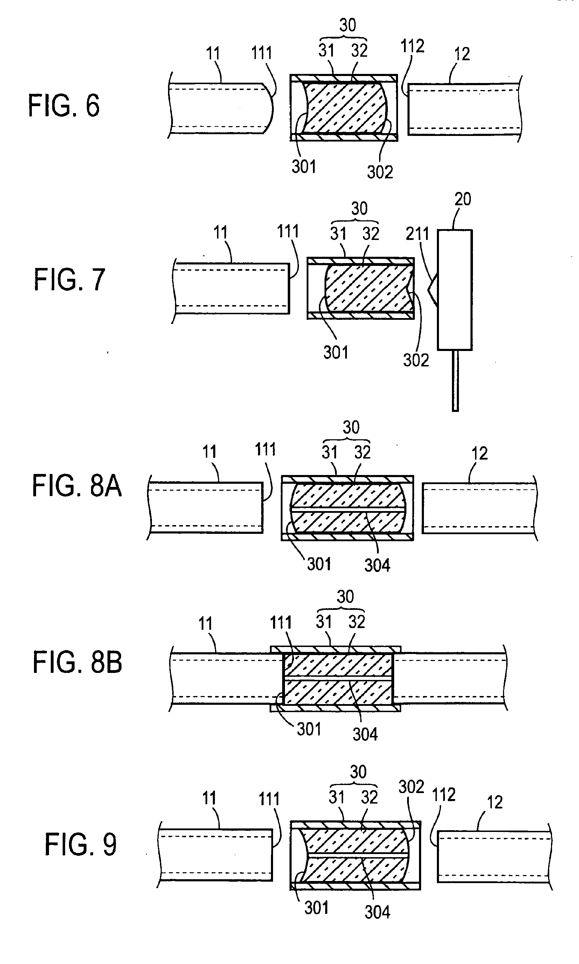

FIG. 6 shows the third embodiment of this invention. This embodiment is a combination of the embodiment in FIG. 4A and the embodiment in FIG. 5, wherein one connecting end surface 301 of the light guide member 32 of the optical fiber connector component 30 is concave, the other connecting end surface 302 is convex, and the distal end surfaces 111 and 112 of the optical fibers 11 and 12 connected thereto are a convex surface and a flat surface, respectively.

FIG. 7 shows the fourth embodiment of this invention. This embodiment illustrates a case of an optical fiber connector component used to connect the light guide member of this invention to a light receiving element or a light emitting element (hereinafter, both are collectively referred to as optically active elements). As shown in FIG. 7, one connecting end surface 301 of the light guide member 32 is connected to an optical fiber 11 in a similar manner as previously described, and the other connecting end surface 302 is connected to the lens 211 of an optically active element 20. The lens 211 herein is conical in shape, and is formed so as to protrude from the body surface of the optically active element 20.

The connecting end surface 302 of the light guide member 32 on the opposite side of the connecting end surface 301 is a conical concave surface. The depth of this conical concave surface 302 is less than the height of the conical lens 211, and the apex angle of the conical concave surface is greater than the apex angle of the conical lens 211. The distal end of the pipe 31 on the side of the optically active element 20 lies in the same plane as the distal end of the light guide member 32 on the side of the optically active element 20. As a result of this configuration, when the lens 211 is aligned with the concave surface 303, and the optically active element 20 and the optical fiber connector component 30 are pushed together, the distal end of the conical lens 211 strikes the apex of the conical concave surface constituting the connecting end surface 302, and the connecting end surface 302 deforms so that the contact area further expands outward. The connecting end surface 302 in FIG. 7 may be either a concave surface or a flat surface. The lens 211 of the optically active element 20 may also have a convex spherical surface instead of a conical shape, in which case the connecting end surface 302 may be either a flat surface or a concave surface with a greater radius of curvature than the lens 211.

In principle, the air between the surfaces 111 and 301 can be forced out and the two surfaces can be brought into close contact with each other, as in the embodiments described above, but the connecting end surface 301 of the light guide member 32, which is actually elastic, may have irregularities (not shown), and the air cannot necessarily be forced out completely. In the fifth embodiment shown in FIG. 8A, an example is shown in which a through-hole 304 is formed along the center axis of the light guide member 32 in the embodiment in FIG. 5. The diameter of the through-hole 304 is, for example, about 10 to 15% of the core diameter of the optical fiber 11, and has minimal effect on light transmission. When the optical fiber 11 having a flat distal end surface is pushed into the pipe 31 of the optical fiber connector component 30 in FIG. 8A, the connecting end surface 301 of the light guide member 32 elastically deforms and the surfaces 111 and 301 are firmly attached, as shown in FIG. 8B. The presence of the through-hole 304 allows the air that would be trapped in the center area without a through-hole to be expelled, and the end surfaces 111 and 301 can be more reliably brought into close contact.

In the embodiments previously described, cases were illustrated in which the area of contact with the connecting end surface of the light guide member 32 expanded outward from the center as the distal end of the optical fiber was pushed into the pipe 31 of the optical fiber connector component, but another possibility is for the connecting end surface 301 in the embodiment in FIG. 8A to be a concave spherical surface, as shown in the sixth embodiment in FIG. 9, whereby the contact area expands inward from the outer periphery as the optical fiber is pushed in. In this embodiment, in order for the air in the space formed between the flat distal end surface 111 of the optical fiber 11 and the concave connecting end surface 301 of the light guide member 32 to be expelled from the through-hole 304, abutment under pressure must first be established between the distal end surface 111 of the optical fiber 11 and the connecting end surface 301 of the light guide member 32, and then abutment under pressure must be established between the distal end surface 112 of the optical fiber 12 and the connecting end surface 302 of the light guide member 32.

In consequence, the light guide member 32 of the optical fiber connector component according to this invention is formed so as to have a connecting end surface with a different radius of curvature than the radius of curvature of the distal end surface of the optical fiber to be connected.

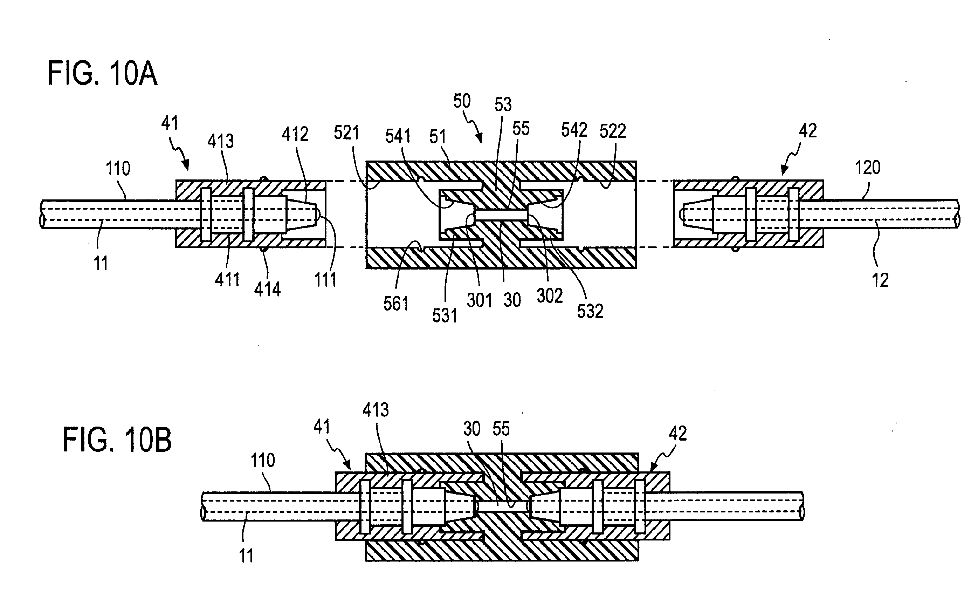

FIGS. 10A and 10B are diagrams for describing an embodiment of an optical fiber connector 50 that uses the optical fiber connector component 30 described above, showing a connection between two optical fiber cables 110 and 120. The optical fiber cables 110 and 120 are formed as coverings over the outer sides of the optical fibers 11 and 12, respectively. The ends of these optical fiber cables 110 and 120 are provided with optical fiber plugs 41 and 42, respectively.

The optical fiber connector 50 is formed to be symmetrical about an axial center, and is also formed so that the center axis coincides with the axis of a cylinder at both ends of a cylindrical connector body 51 composed of a synthetic resin, and circular plug receiving holes 521 and 522 are formed in close proximity to each other across a partition 53. Cylindrical projections 531 and 532 whose outside diameters are smaller than the inside diameters of the plug receiving holes 521 and 522 are integrally formed in both sides of the partition 53 so as to extend towards the axial centers of the holes. Conical trapezoidal guiding holes 541 and 542 that decrease in inside diameter inward from the end surfaces of the cylindrical projections 531 and 532 are formed, and a center hole 55 that communicates the guiding holes with each other is formed through the partition 53 in the bottom surfaces of the guiding holes.

The diameter and length of the center hole 55 are substantially the same as the outside diameter and length of the optical fiber connector component 30 of the above-described invention, and the connector component 30 is inserted through the center hole 55. Friction-locking grooves 561 and 562 are formed in the middle of the receiving holes 521 and 522.

A plug 41 has a cylindrical plug body 413 composed of a synthetic resin, and also has a ferrule 411 which is composed of metal or a synthetic resin, which is mounted inside the plug body, and through which the end of the optical fiber is inserted and fixed in place. A friction-locking protuberance 414 is formed protruding in the peripheral surface of the plug body 413. The outside diameter of the cylindrical plug body 413 is slightly smaller than the inside diameter of the plug hole 521, and the inside diameter of the distal end is slightly greater than the outside diameter of the cylindrical projection 531. Therefore, when the plug 41 is inserted into the receiving hole 521, the cylindrical projection 531 enters into the distal end of the cylindrical plug body 413, as shown in FIG. 10B. The distal end 412 of the ferrule 411 has the same conic trapezoidal shape as the guiding hole 541. The end of the optical fiber cable 110 is held firmly in place inside the ferrule 411, and the optical fiber 11 protrudes slightly from the distal end 412 of the ferrule 411, with the covering peeled away. The plug 42 has the same structure as the plug 41.

When the distal end of the plug 41 is inserted through the receiving hole 521, and the plug 41 is further pushed in against the friction between the friction-locking protuberance 414 and the inside wall of the receiving hole 521, the distal end 412 of the ferrule 411 is guided by the guiding hole 541 so that the axis of the optical fiber 11 coincides with the axis of the optical fiber connector component 30, as shown in FIG. 10B. The friction-locking protuberance 414 engages with the friction-locking groove 561 while the end surface 111 of the optical fiber 11 is brought into abutment under pressure with the end surface of the light guide member 32 inside the pipe 31 of the optical fiber connector component 30, and the connection between the plug 41 and the optical fiber connector 50 is secured. The same connection is established between the plug 42 and the optical fiber connector 50. The optical fiber cables 110 and 120 are thereby connected via the optical fiber connector 50.

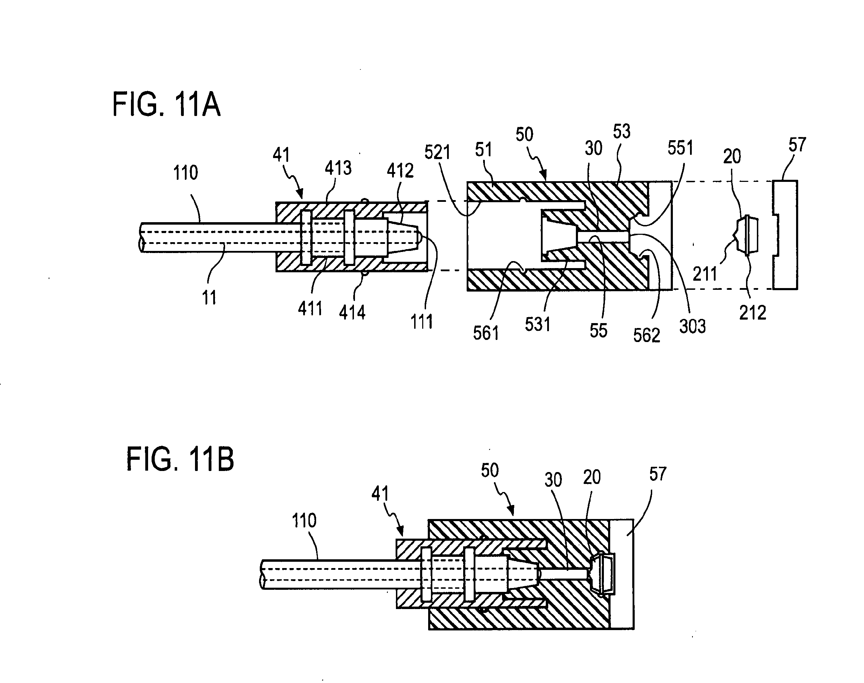

FIGS. 11A and 11B show an example of an optical fiber connector 50 used to connect an optical fiber cable 110 and an optically active element 20. The configuration of this optical fiber connector 50 on the side connecting with the optical fiber cable 110 is the same as is described in FIGS. 9A and 9B, and a description thereof is omitted. An housing hole 551 for housing the optically active element 20 is formed in the wall surface of the partition 53 on the side of the optical fiber connector 50 that faces the optically active element 20, instead of the receiving hole 522 shown in FIG. 10A. The housing hole 551 is communicated with the other side via the center hole 55 formed through the partition 53, and has a friction-locking groove 562 formed in the inner peripheral surface. The optically active element 20 has a full-surface lens 211 and a friction-locking protrusion 212 formed in the outer periphery.

The optical fiber plug 41 is connected to the optical fiber connector 50 in the same manner as described above, as shown in FIG. 11 B. Pushing the optically active element 20 into the housing hole 551 causes the friction-locking protrusion 212 to engage with the friction-locking groove 562. In this state, the lens 211 pushes against and deforms the end surface 302 of the light guide member of the optical fiber connector component 30, and the end surface 302 of the light guide member and the lens 211 are firmly attached. A fixing plate 57 engages with and is fixed in place by the end surface of the optical fiber connector 50 while the optically active element 20 is pressed against the optical fiber connector component 30.

According to this invention, the optical fiber connector component is configured from a cylindrical light guide member made from a transparent and elastic material, and a pipe that accommodates the light guide member in the interior, with one end protruding past the connecting end surface of the light guide member. The radius of curvature of the connecting end surface of the light guide member differs from the radius of curvature of the distal end surface of the optical fiber to be connected. Consequently, pushing the distal end of the optical fiber into the pipe causes the area of contact between the distal end surface of the optical fiber and the connecting end surface of the light guide member to either expand outward from the center or expand inward from the outer periphery, whereby the air between the contact surfaces can be expelled. Therefore, connection loss can be greatly reduced when optical fibers are connected to each other or when an optical fiber and another optical component are connected to each other.

## Claims

1. An optical fiber connector component, comprising:
a cylindrical light guide member made from a transparent and elastic material having substantially a same outside diameter as that of an optical fiber to be connected; and
a pipe having an inside diameter substantially equal to the outside diameter of said light guide member, for holding inside thereof said light guide member; wherein
said light guide member has at one end a connecting end surface whose radius of curvature is different from the radius of curvature of the distal end surface of said optical fiber, and one end of said pipe protrudes past said connecting end surface of said light guide member.

2. The optical fiber connector component according to claim 1,
wherein said connecting end surface of said light guide member is a convex surface.

3. The optical fiber connector component according to claim 1,
wherein said connecting end surface of said light guide member is a concave surface.

4. The optical fiber connector component according to claim 1,
wherein said pipe is formed from a transparent synthetic resin having a lower refractive index in comparison with said light guide member.

5. The optical fiber connector component according to any one of claims 1 through 4, wherein the other end of said light guide member has a second connecting end surface for connecting with a second optical fiber, and the radius of curvature of said second connecting end surface differs from the radius of curvature of the distal end surface of said second optical fiber.

6. The optical fiber connector component according to claim 5,
wherein a through-hole running from said first connecting end surface to said second connecting end surface is formed along the center axis of said light guide member.

7. The optical fiber connector component according to any of claims 1 through 4, wherein the other end of said light guide member has a second connecting end surface provided with a concave surface for connecting with a lens of an optically active element.

8. An optical fiber connector that uses the optical fiber connector component according to claim 5, comprising:
a tubular connector body having a first and second receiving hole at either end for inserting first and second optical fiber plugs provided to the ends of said first and second optical fibers, wherein said connector body has a partition, integrally formed in the interior, for separating said first and second receiving holes, and a center hole, formed through said partition, for providing communication between said first and second receiving holes; and
said optical fiber connector component being mounted inside said center hole.

9. An optical fiber connector that uses the optical fiber connector component according to claim 7, comprising:
a tubular connector body having a receiving hole at one end for inserting an optical fiber plug provided to the end portion of said optical fiber, and an housing hole at the other end for inserting said optically active element, wherein said connector body has a partition integrally formed in the interior for separating said receiving hole and said housing hole, and a center hole, formed through said partition, for providing communication between said receiving hole and said housing hole; and
said optical fiber connector component mounted inside said center hole.
